# EUROPEAN PATENT SPECIFICATION

(11) **EP 4 306 599 B1**
(45) Date of publication and mention of the grant of the patent: **13.08.2025**
(21) Application number: 22767056.9
(22) Date of filing: 07.03.2022
(51) Int. Cl.: C09D 5/16, C09D 133/04, C09D 7/61, C09D 7/63

(54) **ANTIFOULING COATING COMPOSITION**
FÄULNISVERHINDERNDE BESCHICHTUNGSZUSAMMENSETZUNG
COMPOSITION DE REVÊTEMENT ANTISALISSURE

(30) Priority: 12.03.2021 JP 2021040820
(43) Date of publication of application: 17.01.2024
(73) Proprietor: Nitto Kasei Co., Ltd., Osaka-shi Osaka 533-0031 (JP)
(72) Inventor: KITAMURA, Hitoshi, Osaka-shi, Osaka 533-0031 (JP); OKA, Nagato, Osaka-shi, Osaka 533-0031 (JP); MATSUKI, Takashi, Osaka-shi, Osaka 533-0031 (JP); WAKU, Hidenori, Osaka-shi, Osaka 533-0031 (JP); YASUI, Takuya, Osaka-shi, Osaka 533-0031 (JP); ITO, Motomichi, Osaka-shi, Osaka 533-0031 (JP)
(74) Representative: Gulde & Partner
(86) International application number: PCT/JP2022/009614
(87) International publication number: WO 2022/191100

(56) References cited:
- WO-A1-2008/105122
- WO-A1-2016/063789
- WO-A1-2018/158436
- WO-A1-2019/069777
- WO-A1-2020/045211
- WO-A1-2020/045211
- JP-A- 2003 119 419
- JP-A- 2003 119 420
- JP-A- 2005 507 450
- JP-A- 2013 527 868
- JP-A- 2020 189 896
- JP-A- H06 264 007

## Description

### TECHNICAL FIELD

The present invention relates to an antifouling coating composition.

### BACKGROUND ART

Aquatic fouling organisms such as barnacles, tubeworms, common mussels, *Bugula neritina,* sea squirts, green laver, sea lettuce, and slimes adhere to ships (especially, on the bottom of ships), fishing tools such as fishing nets and fishing net accessories, and underwater structures such as power plant aqueducts, thereby causing problems such as impaired functionality and appearance of the ships and the like. Examples may be found in Patent Literature 2-5.

In order to prevent such problems, there are known techniques in which an antifouling coating composition is applied onto a ship or the like to form an antifouling coating film such that an antifouling agent is gradually released from the antifouling coating film, which allows antifouling performance to be exhibited over a long period of time (Patent Literature 1).

### CITATION LIST

### PATENT LITERATURE

[Patent Literature 1] JP 2000-17203 A
[Patent Literature 2] WO 2020/045211 A1
[Patent Literature 3] WO 2018/158436 A1
[Patent Literature 4] JP 2003 119419 A
[Patent Literature 5] JP 2003 119420 A

### SUMMARY OF INVENTION

### TECHNICAL PROBLEM

However, even with the technique of Patent Literature 1, coating film dissolution at the initial stage may become excessively large or coating film defects such as cracks may occur after a relatively short period of time, so there is a need for further improvement.

The present invention has been made in view of such circumstances, and provides an antifouling coating composition capable of maintaining a stable coating film dissolution rate in seawater over a long period of time, and capable of maintaining stable antifouling performance without causing coating film defects such as cracks.

### SOLUTION TO PROBLEM

According to the present invention, there is provided an antifouling coating composition comprising a carboxylic acid ester Q represented by general formula (1) and an antifouling agent.

As a result of diligent research to solve the above problems, the present inventors have found that the composition comprising the carboxylic acid ester Q can solve the above problems and have completed the present invention.

### DESCRIPTION OF EMBODIMENTS

The present invention will be described in detail below.

### 1. Antifouling Coating Composition

An antifouling coating composition of the present invention contains a carboxylic acid ester Q and an antifouling agent which is selected from cuprous oxide, copper thiocyanate, copper powder, copper 2-mercaptopyridine-N-oxide, zinc 2-mercaptopyridine-N-oxide, zinc ethylene-bis-dithiocarbamate, 4,5-dichloro-2-n-octyl-3-isothiazolone, 3,4-dichlorophenyl-N,N-dimethylurea, 2-methylthio-4-t-butylamino-6-cyclopropylamino-s-triazine, 2-(p-chlorophenyl)-3-cyano-4-bromo-5-trifluoromethylpyrrole, and 4-[1-(2,3-dimethylphenyl)ethyl]-1H-imidazole, and preferably contains at least one of a copolymer A, a copolymer B, and a copolymer C.

### 1-1. Carboxylic acid ester Q

The carboxylic acid ester Q is represented by general formula (1). 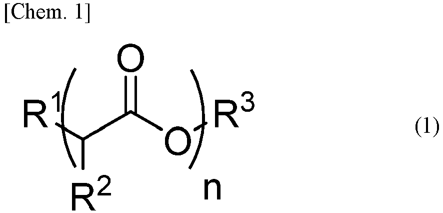 wherein R¹ represents a gum rosin acid residue, a hydrogenated rosin acid residue, a disproportionated rosin acid residue, a versatic acid residue, or a naphthenic acid residue, R² represents hydrogen, a methyl group, or a phenyl group, R³ is an alkyl group having 1 to 8 carbon atoms optionally substituted with an alkoxy group having 1 to 8 carbon atoms or a phenyl group, or represents a phenyl group, and n represents an integer of 1 to 10.

R¹ is a gum rosin acid residue, a hydrogenated rosin acid residue, a disproportionated rosin acid residue, a versatic acid residue, or a naphthenic acid residue. Still more preferably R¹ may be a gum rosin acid residue or a hydrogenated rosin acid residue.

The number of carbon atoms in the alkoxy group or alkyl group of R³ is, for example, 1, 2, 3, 4, 5, 6, 7, or 8, and may be within the range between any two numerical values exemplified here. R³ is, for example, a methyl group, an ethyl group, a n-propyl group, an isopropyl group, a n-butyl group, a t-butyl group, a 2-ethylhexyl group, a cyclohexyl group, a benzyl group, a phenyl group, a 2-methoxyethyl group, a 4-methoxybutyl group, a vinyl group, or an allyl group, and is preferably a methyl group, an ethyl group, an isopropyl group, or a n-butyl group.

n represents an integer of 1 to 10, and preferably 2 to 6, from the viewpoint of long-term antifouling property. n is, for example, 2, 3, 4, 5, 6, 7, 8, 9, or 10, and may be within the range between any two numerical values exemplified here.

The carboxylic acid ester Q preferably contains both a compound in which n is 1 and a compound in which n is 2 or more. In this case, stable dissolution of coating film and crack resistance tend to continue.

Examples of the carboxylic acid ester Q include methoxycarbonylmethyl ester, ethoxycarbonylmethyl ester, n-propoxycarbonylmethyl ester, n-butoxycarbonylmethyl ester, t-butoxycarbonylmethyl ester, 2-ethylhexyloxycarbonylmethyl ester, cyclohexyloxycarbonylmethyl ester, benzyloxycarbonylmethyl ester, phenoxycarbonylmethyl ester, 2-methoxyethoxycarbonylmethyl ester, 4-methoxybutoxycarbonylmethyl ester, allyloxycarbonylmethyl ester, vinyloxycarbonylmethyl ester, 1-(methoxycarbonyl)ethyl ester, 1-(ethoxycarbonyl)ethyl ester, 1-(n-propoxycarbonyl)ethyl ester, 1-(isopropoxycarbonyl)ethyl ester, 1-(n-butoxycarbonyl)ethyl ester, 1-(t-butoxycarbonyl)ethyl ester, α-(methoxycarbonyl)benzyl ester, α-(ethoxycarbonyl)ester, methyldi(oxycarbonylmethyl) ester, ethyldi(oxycarbonylmethyl) ester, isopropyldi(oxycarbonylmethyl) ester, n-propyldi(oxycarbonylmethyl) ester, n-butyldi(oxycarbonylmethyl) ester, t-butyldi(oxycarbonylmethyl) ester, 2-ethylhexyldi(oxycarbonylmethyl) ester, cyclohexyldi(oxycarbonylmethyl) ester, benzyldi(oxycarbonylmethyl) ester, phenyldi(oxycarbonylmethyl) ester, 2-methoxyethyldi(oxycarbonylmethyl) ester, 4-methoxybutyldi(oxycarbonylmethyl) ester, allyldi(oxycarbonylmethyl) ester, vinyldi(oxycarbonylmethyl) ester, methyldi[1-(oxypolycarbonyl)ethyl] ester, ethyldi[1-(oxypolycarbonyl)ethyl]ester, n-propyldi[1-(oxypolycarbonyl)ethyl]ester, isopropyldi[1-(oxypolycarbonyl)ethyl] ester, n-butyldi[1-(oxypolycarbonyl)ethyl] ester, t-butyldi[1-(oxypolycarbonyl)ethyl] ester, methyldi[α-(oxycarbonyl)benzyl] ester, and ethyldi[α-(oxycarbonyl)benzyl] ester of carboxylic acids.

Preferred examples of the carboxylic acid ester Q include methyldi(oxycarbonylmethyl) ester, ethyldi(oxycarbonylmethyl) ester, isopropyldi(oxycarbonylmethyl) ester, isopropyldi(oxycarbonylmethyl) ester, n-propyldi(oxycarbonylmethyl) ester, n-butyldi(oxycarbonylmethyl) ester, methyldi[1-(oxypolycarbonylethyl)] ester, ethyl di[1-(oxypolycarbonylethyl)] ester, methylpoly(oxycarbonylmethyl) ester, ethyl poly(oxycarbonylmethyl) ester, isopropyl poly(oxycarbonylmethyl) ester, n-propyl poly(oxycarbonylmethyl) ester, n-butyl poly(oxycarbonylmethyl) ester, t-butyl poly(oxycarbonylmethyl) ester, 2-ethylhexyl poly(oxycarbonylmethyl) ester, cyclohexylpoly(oxycarbonylmethyl) ester, benzylpoly(oxycarbonylmethyl) ester, phenylpoly(oxycarbonylmethyl) ester, 2-methoxyethyl poly(oxycarbonylmethyl) ester, 4-methoxybutyl poly(oxycarbonylmethyl) ester, allyl poly(oxycarbonylmethyl) ester, vinylpoly(oxycarbonylmethyl) ester, methylpoly[1-(oxypolycarbonyl)ethyl] ester, ethylpoly[1-(oxypolycarbonyl)ethyl] ester, n-propyl poly[1-(oxypolycarbonyl)ethyl] ester, isopropylpoly[1-(oxypolycarbonyl)ethyl] ester, n-butylpoly[1-(oxypolycarbonyl)ethyl] ester, t-butylpoly[1-(oxypolycarbonyl)ethyl] ester, methylpoly[α-(oxycarbonyl)benzyl] ester, andethylpoly[α-(oxycarbonyl)benzyl] ester; and still more preferred examples thereof include methoxycarbonylmethyl ester, ethoxycarbonylmethyl ester, isopropoxycarbonylmethyl ester, n-propoxycarbonylmethyl ester, n-butoxycarbonylmethyl ester, 1-(methoxycarbonyl)ethyl ester, 1-(ethoxycarbonyl)ethyl ester, methylpoly(oxycarbonylmethyl) ester, ethylpoly(oxycarbonylmethyl) ester, isopropylpoly(oxycarbonylmethyl) ester, n-propylpoly(oxycarbonylmethyl) ester, n-butylpoly(oxycarbonylmethyl) ester, methylpoly[1-(oxypolycarbonylethyl)] ester, and ethylpoly[1-(oxypolycarbonylethyl)] ester.

### 1-2. Copolymer A

The copolymer A is a copolymer of a monomer (a) and an ethylenically unsaturated monomer (b) other than the monomer (a), and contains monomer units derived from the monomer (a) and the monomer (b). The content of the monomer (a) with respect to the total of the monomer (a) and the monomer (b) is preferably 10 to 90% by mass, and still more preferably 20 to 70% by mass. Specifically, the content thereof is, for example, 10, 15, 20, 25, 30, 35, 40, 45, 50, 55, 60, 65, 70, 75, 80, 85, or 90% by mass, and may be within the range between any two numerical values exemplified here. In this case, the coating film dissolubility is particularly good.

### 1-2-1. Monomer (a)

The monomer (a) is represented by general formula (2). 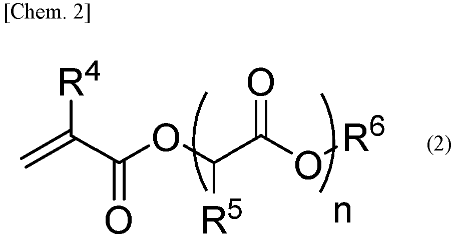 wherein R⁴ represents a methyl group, R⁵ represents hydrogen, a methyl group, or a phenyl group, R⁶ is an alkyl group having 1 to 8 carbon atoms optionally substituted with an alkoxy group having 1 to 8 carbon atoms or a phenyl group, or represents a phenyl group, and n represents an integer of 1 to 10.

R⁵ is preferably hydrogen or a methyl group. The description of R⁶ is similar to that of R³.

n represents an integer of 1 to 10, and n is, for example, 1, 2, 3, 4, 5, 6, 7, 8, 9, or 10, and may be within the range between any two numerical values exemplified here.

The monomer (a) contains a compound represented by general formula (2) in which n is 2 or more. When the compound in which n is 2 or more is contained as the monomer (a), the coating film dissolubility is increased. The monomer (a) may only be constituted by a compound in which n is 2 or more, or may be a mixture of a compound in which n is 1 and a compound in which n is 2 or more.

The monomer (a) is preferably constituted by a monomer (a1) and a monomer (a2). The content of the monomer (a1) in the monomer (a) is preferably 50 to 80% by mass, more preferably 55 to 75% by mass, and particularly preferably 60 to 70% by mass. The monomer (a1) has the property of increasing the coating film strength and decreasing the coating film dissolubility as compared with the monomer (a2). Therefore, when the content of the monomer (a1) is too small, the strength of the coating film tends to decrease, and the coating film surface condition may deteriorate after a long period of time. On the other hand, when the content of the monomer (a1) is too large, the coating film dissolubility decreases, and the antifouling performance may deteriorate. The content of the monomer (a1) is, for example, 30, 35, 40, 45, 50, 55, 60, 65, 70, 75, or 80% by mass, and may be within the range between any two numerical values exemplified here.

### <Monomer (a1)>

The monomer (a1) is a compound represented by general formula (2) in which n is 1.

Examples of the monomer (a1) include methoxycarbonylmethyl (meth)acrylate, ethoxycarbonylmethyl (meth)acrylate, isopropoxycarbonylmethyl (meth)acrylate, n-propoxycarbonylmethyl (meth)acrylate, n-butoxycarbonylmethyl (meth)acrylate, t-butoxycarbonylmethyl (meth)acrylate, 2-ethylhexyloxycarbonylmethyl (meth)acrylate, cyclohexyloxycarbonylmethyl (meth)acrylate, benzyloxycarbonylmethyl (meth)acrylate, phenoxycarbonylmethyl (meth)acrylate, 2-methoxyethoxycarbonylmethyl (meth)acrylate, 4-methoxybutoxycarbonylmethyl (meth)acrylate, allyloxycarbonylmethyl (meth)acrylate, vinyloxycarbonylmethyl (meth)acrylate, 1-(methoxycarbonyl)ethyl (meth)acrylate, 1-(ethoxycarbonyl)ethyl (meth)acrylate, 1-(n-propoxycarbonyl)ethyl (meth)acrylate, 1-(isopropoxycarbonyl)ethyl (meth)acrylate, 1-(n-butoxycarbonyl)ethyl (meth)acrylate, 1-(t-butoxycarbonyl)ethyl (meth)acrylate,α-(methoxycarbonyl)benzyl (meth)acrylate, and α-(ethoxycarbonyl)benzyl (meth)acrylate, and preferred examples thereof include methoxycarbonylmethyl (meth)acrylate, ethoxycarbonylmethyl (meth)acrylate, isopropoxycarbonylmethyl (meth)acrylate, n-butoxycarbonylmethyl (meth)acrylate, 1-(methoxycarbonyl)ethyl (meth)acrylate, and 1-(ethoxycarbonyl)ethyl (meth)acrylate.

### <Monomer (a2)>

The monomer (a2) is a compound represented by general formula (2) in which n is 2 or more. n in general formula (2) is preferably 2 to 6 from the viewpoint of long-term antifouling property.

The monomer (a2) preferably contains both a compound in which n is 2 and a compound in which n is 3 or more. Specifically, the mass ratio (n(2)/n(2 to 10)) in terms of solid content is preferably, for example, 0.4 to 0.8, and more preferably 0.5 to 0.7. In this case, stable dissolution of the coating film tends to continue. Specifically, the value is, for example, 0.40, 0.45, 0.50, 0.55, 0.60, 0.65, 0.70, 0.75, or 0.80, and may be within the range between any two numerical values exemplified here.

Examples of the monomer (a2) include di(oxycarbonylmethyl) methyl (meth)acrylate, di(oxycarbonylmethyl) ethyl (meth)acrylate, di(oxycarbonylmethyl) isopropyl (meth)acrylate, di(oxycarbonylmethyl) n-propyl (meth)acrylate, di(oxycarbonylmethyl) n-butyl (meth)acrylate, di(oxycarbonylmethyl) t-butyl (meth)acrylate, di(oxycarbonylmethyl) 2-ethylhexyl (meth)acrylate, di(oxycarbonylmethyl) cyclohexyl (meth)acrylate, di(oxycarbonylmethyl) benzyl (meth)acrylate, di(oxycarbonylmethyl) phenyl (meth)acrylate, di(oxycarbonylmethyl) 2-methoxyethyl (meth)acrylate, di(oxycarbonylmethyl) 4-methoxybutyl (meth)acrylate, di(oxycarbonylmethyl) allyl (meth)acrylate, di(oxycarbonylmethyl) vinyl (meth)acrylate, di[1-(oxypolycarbonyl)ethyl] methyl (meth)acrylate, di[1-(oxypolycarbonyl)ethyl] ethyl (meth)acrylate, di[1-(oxypolycarbonyl)ethyl] n-propyl (meth)acrylate, di[1-(oxypolycarbonyl)ethyl] isopropyl (meth)acrylate, di[1-(oxypolycarbonyl)ethyl] n-butyl (meth)acrylate, di[1-(oxypolycarbonyl)ethyl] t-butyl (meth)acrylate, di[α-(oxycarbonyl)benzyl] methyl (meth)acrylate, and di[α-(oxycarbonyl)benzyl] ethyl (meth)acrylate, preferred examples thereof include di(oxycarbonylmethyl) methyl (meth)acrylate, di(oxycarbonylmethyl) ethyl (meth)acrylate, di(oxycarbonylmethyl) isopropyl (meth)acrylate, di(oxycarbonylmethyl) n-propyl (meth)acrylate, di(oxycarbonylmethyl) n-butyl (meth)acrylate, di[1-(oxypolycarbonylethyl)] methyl (meth)acrylate, di[1-(oxypolycarbonylethyl)] ethyl (meth)acrylate, poly(oxycarbonylmethyl) methyl (meth)acrylate, poly(oxycarbonylmethyl) ethyl (meth)acrylate, poly(oxycarbonylmethyl) isopropyl (meth)acrylate, poly(oxycarbonylmethyl) n-propyl (meth)acrylate, poly(oxycarbonylmethyl) n-butyl (meth)acrylate, poly(oxycarbonylmethyl) t-butyl (meth)acrylate, poly(oxycarbonylmethyl) 2-ethylhexyl (meth)acrylate, poly(oxycarbonylmethyl) cyclohexyl (meth)acrylate, poly(oxycarbonylmethyl) benzyl (meth)acrylate, poly(oxycarbonylmethyl) phenyl (meth)acrylate, poly(oxycarbonylmethyl) 2-methoxyethyl (meth)acrylate, poly(oxycarbonylmethyl) 4-methoxybutyl (meth)acrylate, poly(oxycarbonylmethyl) allyl (meth)acrylate, poly(oxycarbonylmethyl) vinyl (meth)acrylate, poly[1-(oxypolycarbonyl)ethyl] methyl (meth)acrylate, poly[1-(oxypolycarbonyl)ethyl] ethyl (meth)acrylate, poly[1-(oxypolycarbonyl)ethyl] n-propyl (meth)acrylate, poly[1-(oxypolycarbonyl)ethyl] isopropyl (meth)acrylate, poly[1-(oxypolycarbonyl)ethyl] n-butyl (meth)acrylate, poly[1-(oxypolycarbonyl)ethyl] t-butyl (meth)acrylate, poly[α-(oxycarbonyl)benzyl] methyl (meth)acrylate, and poly[α-(oxycarbonyl)benzyl] ethyl (meth)acrylate, preferred examples thereof include poly(oxycarbonylmethyl) methyl (meth)acrylate, poly(oxycarbonylmethyl) ethyl (meth)acrylate, poly(oxycarbonylmethyl) isopropyl (meth)acrylate, poly(oxycarbonylmethyl) n-propyl (meth)acrylate, poly(oxycarbonylmethyl) n-butyl (meth)acrylate, poly[1-(oxypolycarbonylethyl)] methyl (meth)acrylate, and poly[1-(oxypolycarbonylethyl)] ethyl (meth)acrylate.

### 1-2-2. Monomer (b)

The monomer (b) is an ethylenically unsaturated monomer other than the monomer (a). The monomer (b) can be classified into a monomer (b1) and a monomer (b2), and the monomer (b) used in the polymerization of the copolymer A contains one or both of the monomer (b1) and the monomer (b2).

### <Monomer (b1)>

The monomer (b1) is represented by general formula (3). 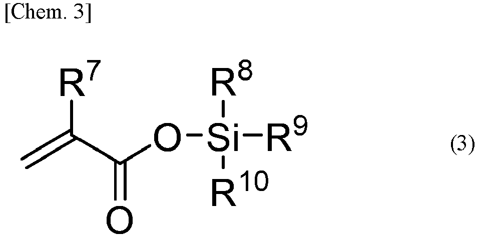 wherein R⁷ is hydrogen or a methyl group, and R⁸ to R¹⁰ are the same as or different from each other and each represent a branched alkyl group having 3 to 8 carbon atoms or a phenyl group.

The number of carbon atoms in the branched alkyl group is, for example, 3, 4, 5, 6, 7, or 8, and may be within the range between any two numerical values exemplified here. Examples of the branched alkyl group include an isopropyl group, an isopropenyl group, an isobutyl group, a s-butyl group, a t-butyl group, a 1-ethylpropyl group, a 1-methylbutyl group, a 1-methylpentyl group, a 1,1-dimethylpropyl group, a 1,1-dimethylbutyl group, a hexyl group, a cyclohexyl group, a 1,1-dimethylpentyl group, a 1-methylhexyl group, a 1,1-dimethylhexyl group, a 1-methylheptyl group, a 2-methylbutyl group, a 2-ethylbutyl group, a 2,2-dimethylpropyl group, a cyclohexylmethyl group, a 2-ethylhexyl group, a 2-propylpentyl group, and a 3-methylpentyl group. Preferred as R⁸ to R¹⁰ are the same as or different from each other and are an isopropyl group, an isopropenyl group, a s-butyl group, a t-butyl group, a phenyl group, and a 2-ethylhexyl group, and particularly preferred are an isopropyl group and a 2-ethylhexyl group.

Examples of the monomer (b1) include (meth)acrylic acid silyl esters such as triisopropylsilyl (meth)acrylate, triisobutylsilyl (meth)acrylate, tri-s-butylsilyl (meth)acrylate, triisopentylsilyl (meth)acrylate, triphenylsilyl (meth)acrylate, diisopropylphenylsilyl (meth)acrylate, diisopropylisobutylsilyl (meth)acrylate, diisopropyl s-butylsilyl (meth)acrylate, diisopropylisopentylsilyl (meth)acrylate, isopropyl diisobutylsilyl (meth)acrylate, isopropyl di-s-butylsilyl (meth)acrylate, t-butyl diisobutylsilyl (meth)acrylate, t-butyl diisopentylsilyl (meth)acrylate, t-butyl diphenylsilyl (meth)acrylate, diisopropylhexylsilyl (meth)acrylate, diisopropylcyclohexylsilyl (meth)acrylate, tricyclohexylsilyl (meth)acrylate, tri-1,1-dimethylpentylsilyl (meth)acrylate, tri-2,2-dimethylpropylsilyl (meth)acrylate, tricyclohexylmethylsilyl (meth)acrylate, diisopropylcyclohexylmethylsilyl (meth)acrylate, tri-2-ethylhexylsilyl (meth)acrylate, and tri-2-propylpentylsilyl (meth)acrylate. These monomers (c) may be used singly, or two or more thereof may be used in combination.

### <Monomer (b2)>

The monomer (b2) is the monomer (b) excluding the monomer (b1). In other words, the monomer (b2) is a monomer not represented by any of general formulas (2) to (3). Examples of the monomer (b2) include (meth)acrylic acid esters, vinyl compounds, aromatic compounds and dialkyl ester compounds of dibasic acids, which are not represented by general formulas (2) to (3). As used herein, (meth)acrylic acid esters mean acrylic acid esters or methacrylic acid esters.

Examples of the (meth)acrylic acid esters not represented by general formulas (2) to (3) include (meth)acrylic acid esters, such as methyl (meth)acrylate, ethyl (meth)acrylate, butyl (meth)acrylate, isobutyl (meth)acrylate, t-butyl (meth)acrylate, 2-ethylhexyl (meth)acrylate, lauryl (meth)acrylate, 2-methoxyethyl (meth)acrylate, 2-methoxypropyl (meth)acrylate, 4-methoxybutyl (meth)acrylate, benzyl (meth)acrylate, phenyl (meth)acrylate, 2-ethoxyethyl (meth)acrylate, propylene glycol monomethyl (meth)acrylate, 2-hydroxyethyl (meth)acrylate, 2-hydroxypropyl (meth)acrylate, glycidyl (meth)acrylate, furfuryl (meth)acrylate, tetrahydrofurfuryl (meth)acrylate, dimethylaminoethyl (meth)acrylate, diethylaminoethyl (meth)acrylate, 2-[2-(2-hydroxyethoxy)ethoxy]ethoxy]ethyl methacrylate, mono(2-(meth)acryloyloxyethyl) succinate, N-(3-dimethylaminopropyl) (meth)acrylamide, 2-hydroxyethyl (meth)acrylate, 2-[2-(2-methoxyethoxy)ethoxy]ethyl (meth)acrylate, and N,N'-dimethyl (meth)acrylamide.

Examples of the vinyl compounds include vinyl compounds having a functional group, such as vinyl chloride, vinylidene chloride, acrylonitrile, methacrylonitrile, vinyl acetate, vinyl benzoate, vinyl butyrate, butyl vinyl ether, lauryl vinyl ether, and N-vinylpyrrolidone.

Examples of the aromatic compounds include styrene, vinyltoluene, and α-methylstyrene.

Examples of the dialkyl ester compounds of dibasic acids include dimethyl maleate, dibutyl maleate, and dimethyl fumarate.

In the copolymer A, these monomers (b) may be used singly, or two or more thereof may be used in combination. From the viewpoint of coating film dissolubility and coating film property, the monomer (b) preferably contains a (meth)acrylic acid ester of the monomer (b1) or the monomer (b2). From the viewpoint of crack resistance, the monomer (b) preferably contains a (meth)acrylic acid ester of the monomer (b2), and more preferably contains methyl (meth)acrylate, butyl (meth)acrylate, isobutyl (meth)acrylate, t-butyl (meth)acrylate, 2-ethylhexyl (meth)acrylate, 2-methoxyethyl (meth)acrylate, 2-ethoxyethyl (meth)acrylate, 2-hydroxyethyl (meth)acrylate, glycidyl (meth)acrylate, furfuryl (meth)acrylate, tetrahydrofurfuryl (meth)acrylate, or the like. From the viewpoint of coating film dissolubility, the monomer (b) preferably contains the monomer (b1), and more preferably contains triisopropylsilyl (meth)acrylate, t-butyldiphenylsilyl (meth)acrylate, tri-2-ethylhexylsilyl (meth)acrylate, or the like.

### 1-2-3. Physical Properties and Production Method of Copolymer A

The weight-average molecular weight (Mw) of the copolymer A is preferably 5,000 to 300,000. When the molecular weight is less than 5,000, the coating film formed of the antifouling coating material becomes fragile and easily peels off or cracks, and when the molecular weight exceeds 300,000, the viscosity of the polymer solution increases and handling becomes difficult. Specifically, the Mw is, for example, 5,000, 10,000, 20,000, 25,000, 30,000, 40,000, 50,000, 60,000, 70,000, 80,000, 90,000, 100,000, 200,000, or 300,000 and may be within the range between any two numerical values exemplified here.

Examples of the method for measuring Mw include gel permeation chromatography (GPC method).

The copolymer A may be a random copolymer, an alternating copolymer, a periodic copolymer, or a block copolymer of the monomer (a) and the monomer (b).

The copolymer A may be obtained, for example, by polymerizing the monomer (a) and the monomer (b) in the presence of a polymerization initiator.

Examples of the polymerization initiator include azo compounds such as 2,2'-azobisisobutyronitrile, 2,2'-azobis(2-methylbutyronitrile), 2,2'-azobis(2,4-dimethylvaleronitrile), dimethyl-2,2'-azobisisobutyrate, dimethyl-2,2'-azobisisobutyrate, and 2,2'-azobis(N-butyl-2-methylpropionamide); peroxides such as benzoyl peroxide, di-tert-butyl peroxide, tert-butyl peroxybenzoate, tert-butyl peroxyisopropyl carbonate, t-butyl peroxy-2-ethylhexanoate, t-hexylperoxy-2-ethylhexanoate, di-t-hexyl peroxide, t-butylperoxy-2-ethylhexyl monocarbonate, di-t-butyl peroxide, 1,1,3,3-tetramethylbutylperoxyneodecanoate, t-amylperoxyneodecanoate, t-hexylperoxypivalate, t-amylperoxypivalate, and 1,1,3,3-tetramethylbutylperoxy-2-ethylhexanoate. These polymerization initiators may be used singly, or two or more thereof may be used in combination. Particularly preferred as the polymerization initiator are 2,2'-azobisisobutyronitrile, 2,2'-azobis(2-methylbutyronitrile), 2,2'-azobis(2,4-dimethylvaleronitrile), dimethyl 2,2'-azobisisobutyrate, and 1,1,3,3-tetramethylbutylperoxy-2-ethylhexanoate. The amount of the polymerization initiator used may be set as appropriate to adjust the molecular weight of the copolymer A.

Examples of the polymerization method include solution polymerization, bulk polymerization, emulsion polymerization, suspension polymerization, and non-aqueous dispersion polymerization. Among these, solution polymerization or non-aqueous dispersion polymerization is particularly preferred in that the copolymer A simply and accurately can be obtained therethrough.

In the polymerization reaction, an organic solvent may be used as necessary. Examples of the organic solvent include, but are not limited to, aromatic hydrocarbon solvents such as xylene and toluene; aliphatic hydrocarbon solvents; ester solvents such as ethyl acetate, butyl acetate, isobutyl acetate, methoxy propyl acetate, and propylene glycol 1-monomethyl ether 2-acetate; alcohol solvents such as isopropyl alcohol, butyl alcohol, and propylene glycol monomethyl ether; ether solvents such as dioxane, diethyl ether, and dibutyl ether; and ketone solvents such as methyl ethyl ketone and methyl isobutyl ketone.

Among these, preferred are butyl acetate, isobutyl acetate, butyl alcohol, propylene glycol monomethyl ether, propylene glycol 1-monomethyl ether 2-acetate, toluene, and xylene. These solvents may be used singly, or two or more thereof may be used in combination.

The reaction temperature in the polymerization reaction may be set as appropriate according to the type of the polymerization initiator and the like, and is usually 50 to 160°C, preferably 60 to 150°C.

The polymerization reaction is preferably carried out under an inert gas atmosphere such as nitrogen gas or argon gas.

The content of the copolymer A in the composition of the present invention is not particularly limited, but the mass ratio (carboxylic acid ester Q/copolymer A) as the content ratio with respect to the carboxylic acid ester Q is usually 0.01 to 0.9, and preferably 0.05 to 0.4, in terms of solid content. The mass ratio is, for example, 0.01, 0.02, 0.03, 0.04, 0.05, 0.06, 0.07, 0.08, 0.09, 0.1, 0.2, 0.3, 0.4, 0.5, 0.6, 0.7, 0.8, or 0.9, and may be within the range between any two numerical values exemplified here.

### 1-3. Copolymer B

The copolymer B is a copolymer of the monomer (b1) and the monomer (b2), and contains monomer units derived from the monomer (b1) and the monomer (b2). The content of the monomer (b1) with respect to the total of the monomer (b1) and the monomer (b2) is preferably 10 to 90% by mass, and still more preferably 20 to 70% by mass. Specifically, the content thereof is, for example, 10, 15, 20, 25, 30, 35, 40, 45, 50, 55, 60, 65, 70, 75, 80, 85, or 90% by mass, and may be within the range between any two numerical values exemplified here. In this case, the coating film dissolubility is particularly good.

The polymerization method, initiator, solvent, temperature, other conditions, Mw measurement method, and the like may be applied to the method described above for the copolymer A.

The content of the copolymer B in the composition of the present invention is not particularly limited, but the mass ratio (carboxylic acid ester Q/copolymer B) as the content ratio with respect to the carboxylic acid ester Q is usually 0.01 to 0.9, and preferably 0.05 to 0.4, in terms of solid content. The mass ratio is, for example, 0.01, 0.02, 0.03, 0.04, 0.05, 0.06, 0.07, 0.08, 0.09, 0.1, 0.2, 0.3, 0.4, 0.5, 0.6, 0.7, 0.8, or 0.9, and may be within the range between any two numerical values exemplified here.

### 1-4. Copolymer C

The copolymer C is a copolymer of the monomer (b2).

The polymerization method, initiator, solvent, temperature, other conditions, Mw measurement method, and the like may be applied to the method described above for the copolymer A.

The content of the copolymer C in the composition of the present invention is not particularly limited, but the mass ratio (carboxylic acid ester Q/copolymer C) as the content ratio with respect to the carboxylic acid ester Q is usually 0.01 to 0.9, and preferably 0.05 to 0.4, in terms of solid content. The mass ratio is, for example, 0.01, 0.02, 0.03, 0.04, 0.05, 0.06, 0.07, 0.08, 0.09, 0.1, 0.2, 0.3, 0.4, 0.5, 0.6, 0.7, 0.8, or 0.9, and may be within the range between any two numerical values exemplified here.

### 1-5. Antifouling Agent

The antifouling agent is selected from cuprous oxide, copper thiocyanate (generic name: copper rhodanide), and copper powder. Among these, preferred are cuprous oxide and copper rhodanide, and more preferred is cuprous oxide surface-treated with glycerin, sucrose, stearic acid, lauric acid, lecithin, mineral oil and the like in view of long-term stability during storage.

The antifouling agent is further selected from copper 2-mercaptopyridine-N-oxide (generic name: copper pyrithione), zinc 2-mercaptopyridine-N-oxide (generic name: zinc pyrithione), zinc ethylene-bis-dithiocarbamate (generic name: Zineb), 4,5-dichloro-2-n-octyl-3-isothiazolone (generic name: SEA-NINE 211), 3,4-dichlorophenyl-N,N-dimethylurea (generic name: Diuron), 2-methylthio-4-t-butylamino-6-cyclopropylamino-s-triazine (generic name: Irgarol 1051), 2-(p-chlorophenyl)-3-cyano-4-bromo-5-trifluoromethylpyrrole (generic name: Econea 28), and 4-[1-(2,3-dimethylphenyl)ethyl]-1H-imidazole (generic name: medetomidine).

These antifouling agents may be used singly, or two or more thereof may be used in combination.

The content of the antifouling agent in the composition of the present invention is not particularly limited, but is usually 0.1 to 60.0% by mass, in terms of solid content. The content of the antifouling agent is, for example, 0.1, 0.5, 1, 2, 3, 4, 5, 6, 7, 8, 9, 10, 15, 20, 25, 30, 35, 40, 45, 50, 55, or 60% by mass, and may be within the range between any two numerical values exemplified here.

### 1-6. Other Additives

If necessary, a resin component other than the copolymers A, B and C, a release modifier, a plasticizer, a pigment, a dye, an antifoaming agent, a dehydrating agent, a thixotropic agent, an organic solvent, or the like may be further added to the resin for the antifouling coating material of the present invention to obtain the antifouling coating material.

Examples of the other resin component include polyester resins, vinyl resins, petroleum resins, metal-containing resins, zwitterionic compound-containing resins, silicone resins, and alicyclic hydrocarbon resins.

Examples of the release modifier include rosin, hydrogenated rosin, disproportionated rosin, maleated rosin, formylated rosin, polymerized rosin, monocarboxylic acid and salts thereof, such as naphthenic acid, cycloalkenyl carboxylic acid, bicycloalkenyl carboxylic acid, versatic acid, trimethyl isobutenyl cyclohexene carboxylic acid, and metal salts thereof, and alicyclic hydrocarbon resins described above. These may be used singly or in combination of two or more thereof.

Examples of the plasticizer include phosphate esters, phthalate esters, adipate esters, sebacate esters, epoxidized soybean oil, alkyl vinyl ether polymer, polyalkylene glycols, t-nonyl pentasulfide, vaseline, polybutene, tris(2-ethylhexyl) trimellitate, silicone oil, and chlorinated paraffin. These may be used singly or in combination of two or more thereof.

Examples of the dehydrating agent include calcium sulfate, synthetic zeolite adsorbents, orthoesters, silicates such as tetramethoxysilane and tetraethoxysilane, isocyanates, carbodiimides, and carbodiimidazoles. These may be used singly, or two or more thereof may be used in combination.

### 2. Method for Producing Antifouling Coating Composition

The antifouling coating composition of the present invention may be produced, for example, by mixing and dispersing a mixed solution containing the carboxylic acid ester Q and an antifouling agent, and optionally, at least one of the copolymers A to C, other additives, and the like, using a disperser.

A disperser that may be used as a fine pulverizer may be suitably used, for example, as the disperser. For example, commercially available homomixers, sand mills, bead mills, dispersers, or the like may be used. Alternatively, glass beads or the like for mixing and dispersing may be charged into a container equipped with a stirrer and used for mixing and dispersing the mixed solution.

### 3. Method for Antifouling Treatment, Antifouling Coating Film, and Coated Article

In the antifouling treatment method of the present invention, an antifouling coating film is formed on the surface of an object to be coated with the above antifouling coating composition. According to the antifouling treatment method of the present invention, the antifouling coating film gradually dissolves from the surface and the coating film surface is constantly renewed, thereby preventing adhesion of aquatic fouling organisms.

Examples of the object to be coated include ships (in particular, ship bottoms), fishing tools, and underwater structures.

The thickness of the antifouling coating film may be set as appropriate according to the type of object to be coated, sailing speed of the ship, seawater temperature, and the like. For example, in a case where the object to be coated is the bottom of a ship, the thickness of the antifouling coating film is usually 50 to 700 µm, and preferably 100 to 600 µm.

### EXAMPLES

The features of the present invention will be further clarified by Examples and the like to be described below. The present invention, however, is not limited to these Examples and the like.

In each of Production Examples, Examples, and Comparative Examples, "%" represents "% by mass". The weight-average molecular weight (Mw) is a value obtained by GPC (polystyrene equivalent). The conditions for GPC were as follows.
Equipment: HLC-8220GPC manufactured by Tosoh Corporation
Column: TSKgel SuperHZM-M × 2
Flow rate: 0.35 mL/min
Detector: RI
Column thermostatic bath temperature: 40°C
Eluent: THF

The non-volatile matter is a value measured in accordance with JIS K 5601-1-2:1999 (ISO 3251:1993) "Testing Methods for Paint Components: Determination Of Non-Volatile matter".

### 1. Production Example

### 1-1. Production Example of Carboxylic Acid Ester Solution

The carboxylic acid ester solution containing carboxylic acid ester Q was produced in accordance with the method described below.

### <Production Example 1 (Production of Carboxylic Acid Ester Solution q-1)>

Into a four-necked flask equipped with a thermometer, a condenser, a stirrer, and a dropping funnel, 109 g (1.00 mol) of methyl chloroacetate, 335 g of Chinese gum rosin, and 500 g of xylene were charged, and 101 g (1.00 mol) of triethylamine was added dropwise to the mixture with stirring while maintaining the temperature at 40°C or lower. After completion of the dropwise addition, the mixture was stirred at 70 to 80°C for 6 hours. After completion of the reaction, the organic layer was washed with city water, hydrochloric acid water, and sodium bicarbonate water in this order, and then the solvent was removed by concentration under reduced pressure to give 734 g of a 50% xylene solution of carboxylic acid ester (carboxylic acid ester solution q-1).

### <Production Examples 2 to 5 (Production of Carboxylic Acid Ester Solutions q-2 to q-5)>

Carboxylic acid ester solutions q-2 to q-5 were obtained by performing reactions in the same manner as in Production Example 1 using the raw materials shown in Table 1. The reaction conditions and yields of Production Examples 1 to 5 are shown in Table 1.

**[Table 1]**

| Table 1 | | | | | | Raw material (g) | | | | | | | | Yield |
|---|---|---|---|---|---|---|---|---|---|---|---|---|---|---|
| Production Example | Carboxylic acid ester solution | R1 | R2 | R3 | n | CAMe | CAEt | Gum rosin | Hydrogenated rosin | Versatic acid | Naphthenic acid | TEA | Xylene | (g) |
| 1 | q-1 | gum rosin acid | H | Me | 1 | 109 | | 335 | | | | 101 | 500 | 734 |
| 2 | q-2 | gum rosin acid | H | Et | 1 | | 123 | 335 | | | | 101 | 500 | 762 |
| 3 | q-3 | hydrogenated rosin acid | H | Et | 1 | | 123 | | 335 | | | 101 | 500 | 764 |
| 4 | q-4 | versatic acid | H | Et | 1 | | 123 | | | 173 | | 101 | 500 | 492 |
| 5 | q-5 | naphthenic acid | H | Et | 1 | | 123 | | | | 173 | 101 | 500 | 466 |

### <Production Example 6 (Production of Carboxylic Acid Ester q-6)>

### (First Reaction)

Into a four-necked flask equipped with a thermometer, a condenser, and a stirrer, 215 g (1.85 mol) of sodium monochloroacetate, 201 g (1.85 mol) of methyl chloroacetate, and 300 g of N-methyl-2-pyrrolidone were charged, and the mixture was stirred at 70 to 80°C for 6 hours. After completion of the reaction, 500 ml of toluene was added to the reaction solution, and the organic layer was washed with city water, hydrochloric acid water, and sodium bicarbonate water in this order, and then the solvent was removed by concentration under reduced pressure to give 262 g of methyl methoxycarbonyl methyl chloroacetate.

### (Second Reaction)

Subsequently, into a four-necked flask equipped with a thermometer, a condenser, a stirrer, and a dropping funnel, 200 g (1.20 mol) of methoxycarbonyl methyl chloroacetate, which is the product of the first reaction, 401 g of Chinese gum rosin (WW), and 500 g of xylene were charged, and 122 g (1.20 mol) of triethylamine was added dropwise to the mixture with stirring while maintaining the temperature at 40°C or lower. After completion of the dropwise addition, the mixture was stirred at 70 to 80°C for 6 hours. After completion of the reaction, the organic layer was washed with city water, hydrochloric acid water, and sodium bicarbonate water in this order, and then the solvent was removed by concentration under reduced pressure to give 962 g of a 50% xylene solution of carboxylic acid ester (carboxylic acid ester solution q-6).

### <Production Examples 7 to 30 (Production of Carboxylic Acid Ester Solutions q-7 to q-30)>

Carboxylic acid ester solutions q-7 to q-30 shown in Table 2 were obtained by performing reactions in the same manner as in Production Example 6 using the raw materials shown in Table 2. The reaction conditions and yields of Production Examples 6 to 30 are shown in Table 2.

**[Table 2]**

| Table 2 | | | | | | First reaction | | | | | Second reaction | | | | | | | |
|---|---|---|---|---|---|---|---|---|---|---|---|---|---|---|---|---|---|---|
| Production Example | Carboxylic acid ester solution | R1 | R2 | R3 | n | Raw material (g) | | | | Intermediate | Raw material (g) | | | | | | | Yield |
| | | | | | | CANa | CAMe | CAEt | NMP | Yield (g) | Intermediate | Gum rosin | Hydrogenated rosin | Versatic acid | Naphthenic acid | TEA | Xylene | (g) |
| 6 | q-6 | gum rosin acid | H | Me | 2 | 215 | 201 | | 300 | 262 | 200 | 401 | | | | 122 | 500 | 962 |
| 7 | q-7 | gum rosin acid | H | Et | 2 | 199 | | 209 | 300 | 269 | 200 | 369 | | | | 112 | 500 | 910 |
| 8 | q-8 | hydrogenated rosin acid | H | Et | 2 | 199 | | 209 | 300 | 269 | 200 | | 369 | | | 112 | 500 | 909 |
| 9 | q-9 | versatic acid | H | Et | 2 | 199 | | 209 | 300 | 269 | 200 | | | 190 | | 112 | 500 | 604 |
| 10 | q-10 | naphthenic acid | H | Et | 2 | 199 | | 209 | 300 | 269 | 200 | | | | 190 | 124 | 500 | 604 |
| 11 | q-11 | gum rosin acid | H | Me | 3 | 321 | 150 | | 300 | 260 | 200 | 280 | | | | 90 | 500 | 757 |
| 12 | q-12 | gum rosin acid | H | Et | 3 | 305 | | 160 | 300 | 266 | 200 | 280 | | | | 85 | 500 | 757 |
| 13 | q-13 | hydrogenated rosin acid | H | Et | 3 | 305 | | 160 | 300 | 266 | 200 | | 280 | | | 85 | 500 | 757 |
| 14 | q-14 | versatic acid | H | Et | 3 | 305 | | 160 | 300 | 266 | 200 | | | 144 | | 102 | 500 | 526 |
| 15 | q-15 | naphthenic acid | H | Et | 3 | 305 | | 160 | 300 | 266 | 200 | | | | 144 | 94 | 500 | 526 |
| 16 | q-16 | gum rosin acid | H | Me | 4 | 384 | 119 | | 300 | 261 | 200 | 236 | | | | 72 | 500 | 683 |
| 17 | q-17 | gum rosin acid | H | Et | 4 | 349 | | 123 | 300 | 252 | 200 | 225 | | | | 68 | 500 | 664 |
| 18 | q-18 | hydrogenated rosin acid | H | Et | 4 | 349 | | 123 | 300 | 252 | 200 | | 225 | | | 68 | 500 | 664 |
| 19 | q-19 | versatic acid | H | Et | 4 | 349 | | 123 | 300 | 252 | 200 | | | 115 | | 82 | 500 | 477 |
| 20 | q-20 | naphthenic acid | H | Et | 4 | 349 | | 123 | 300 | 252 | 200 | | | | 115 | 76 | 500 | 477 |
| 21 | q-21 | gum rosin acid | H | Me | 5 | 419 | 98 | | 300 | 258 | 200 | 196 | | | | 59 | 500 | 614 |
| 22 | q-22 | gum rosin acid | H | Et | 5 | 382 | | 100 | 300 | 247 | 200 | 188 | | | | 57 | 500 | 601 |
| 23 | q-23 | hydrogenated rosin acid | H | Et | 5 | 382 | | 100 | 300 | 247 | 200 | | 188 | | | 57 | 500 | 601 |
| 24 | q-24 | versatic acid | H | Et | 5 | 382 | | 100 | 300 | 247 | 200 | | | 96 | | 69 | 500 | 445 |
| 25 | q-25 | naphthenic acid | H | Et | 5 | 382 | | 100 | 300 | 247 | 200 | | | | 96 | 63 | 500 | 445 |
| 26 | q-26 | gum rosin acid | H | Me | 6 | 437 | 81 | | 300 | 251 | 200 | 167 | | | | 51 | 500 | 566 |
| 27 | q-27 | gum rosin acid | H | Et | 6 | 408 | | 86 | 300 | 246 | 200 | 162 | | | | 49 | 500 | 556 |
| 28 | q-28 | hydrogenated rosin acid | H | Et | 6 | 408 | | 86 | 300 | 246 | 200 | | 162 | | | 49 | 500 | 556 |
| 29 | q-29 | versatic acid | H | Et | 6 | 408 | | 86 | 300 | 246 | 200 | | | 82 | | 59 | 500 | 421 |
| 30 | q-30 | naphthenic acid | H | Et | 6 | 408 | | 86 | 300 | 246 | 200 | | | | 82 | 54 | 500 | 421 |

The details of the raw materials in Tables 1 and 2 are as follows.
CAMe: methyl chloroacetate
CAEt: ethyl chloroacetate
Gum rosin: Chinese gum rosin (WW)
Hydrogenated rosin: product name "HYPALE CH" (manufactured by Arakawa Chemical Industries, Ltd.)
Versatic acid: product name "Neodecanoic acid" (manufactured by FUJIFILM Wako Pure Chemical Corporation)
Naphthenic acid: manufactured by FUJIFILM Wako Pure Chemical Corporation
TEA: triethylamine
CANa: sodium monochloroacetate
NMP: N-methyl-2-pyrrolidone

### 1-2. Production Example of Monomer (a1)

The monomer (a1) was produced in accordance with the method described below.

### <Production Example 31 (Production of Monomer a1-1)>

Into a four-necked flask equipped with a thermometer, a condenser, a stirrer, and a dropping funnel, 109 g (1.00 mol) of methyl chloroacetate, 72 g (1.00 mol) of acrylic acid, 0.1 g of 4-methoxyphenol, and 500 g of ethyl acetate were charged, and 101 g (1.00 mol) of triethylamine was added dropwise to the mixture with stirring while maintaining the temperature at 40°C or lower. After completion of the dropwise addition, the mixture was stirred at 70 to 80°C for 6 hours. After completion of the reaction, the organic layer was washed with city water, hydrochloric acid water, and sodium bicarbonate water in this order, and the solvent was removed by concentration under reduced pressure to give 129.7 g of a monomer a1-1.

### <Production Examples 32 to 33 (Production of Monomers a1-2 to a1-3)>

Monomers a1-2 to a1-3 were obtained by performing reactions in the same manner as in Production Example 31 using the raw materials shown in Table 3. The reaction conditions and yields of Production Examples 31 to 33 are shown in Table 3.

**[Table 3]**

| Table 3 | | | | | | Raw material (g) | | | | | | | Yield |
|---|---|---|---|---|---|---|---|---|---|---|---|---|---|
| Production Example | Monomer | R4 | R5 | R6 | n | CAMe | CAEt | AA | MAA | TEA | Ethyl acetate | MEHQ | (g) |
| 31 | a1-1 | H | H | Me | 1 | 109 | | 72 | | 101 | 500 | 0.1 | 129.7 |
| 32 | a1-2 | H | H | Et | 1 | | 123 | 72 | | 101 | 500 | 0.1 | 142.3 |
| 33 | a1-3 | Me | H | Et | 1 | | 123 | | 86 | 101 | 500 | 0.1 | 155.0 |

### 1-3. Production Example of Monomer (a2)

The monomer (a2) was produced in accordance with the method described below.

### <Production Example 34 (Production of Monomer a2-1)>

### (First Reaction)

Into a four-necked flask equipped with a thermometer, a condenser, and a stirrer, 215 g (1.85 mol) of sodium monochloroacetate, 201 g (1.85 mol) of methyl chloroacetate, and 300 g of N-methyl-2-pyrrolidone were charged, and the mixture was stirred at 70 to 80°C for 6 hours. After completion of the reaction, 500 ml of toluene was added to the reaction solution, and the organic layer was washed with city water, hydrochloric acid water, and sodium bicarbonate water in this order, and then the solvent was removed by concentration under reduced pressure to give 262 g of methyl methoxycarbonyl methyl chloroacetate.

### (Second Reaction)

Subsequently, into a four-necked flask equipped with a thermometer, a condenser, a stirrer, and a dropping funnel, 200 g (1.20 mol) of methoxycarbonyl methyl chloroacetate, which is the product of the first reaction, 87 g (1.20 mol) of acrylic acid, 0.1 g of 4-methoxyphenol, and 500 g of ethyl acetate were charged, and 122 g (1.20 mol) of triethylamine was added dropwise to the mixture with stirring while maintaining the temperature at 40°C or lower. After completion of the dropwise addition, the mixture was stirred at 70 to 80°C for 6 hours. After completion of the reaction, the organic layer was washed with city water, hydrochloric acid water, and sodium bicarbonate water in this order, and the solvent was removed by concentration under reduced pressure to give 230.6 g of a monomer a2-1.

### <Production Examples 35 to 48 (Production of Monomers a2-2 to a2-15)>

Monomers a2-2 to a2-15 shown in Table 4 were obtained by performing reactions in the same manner as in Production Example 34 using the raw materials shown in Table 4. The reaction conditions and yields of Production Examples 34 to 48 are shown in Table 4.

**[Table 4]**

| Table 4 | | | | | | First reaction | | | | | Second reaction | | | | | | |
|---|---|---|---|---|---|---|---|---|---|---|---|---|---|---|---|---|---|
| | | | | | | Raw material (g) | | | | Intermediate | Raw material (g) | | | | | | Yield |
| Production Example | Monomer | R4 | R5 | R6 | n | CANa | CAMe | CAEt | NMP | Yield (g) | Intermediate | AA | MAA | TEA | Ethyl acetate | MEHQ | (g) |
| 34 | a2-1 | H | H | Me | 2 | 215 | 201 | | 300 | 262 | 200 | 87 | | 122 | 500 | 0.1 | 230.6 |
| 35 | a2-2 | H | H | Et | 2 | 199 | | 209 | 300 | 269 | 200 | 80 | | 112 | 500 | 0.1 | 227.5 |
| 36 | a2-3 | Me | H | Et | 2 | 199 | | 209 | 300 | 269 | 200 | | 95 | 112 | 500 | 0.1 | 227.5 |
| 37 | a2-4 | H | H | Me | 3 | 321 | 150 | | 300 | 260 | 200 | 64 | | 90 | 500 | 0.1 | 220.1 |
| 38 | a2-5 | H | H | Et | 3 | 305 | | 160 | 300 | 266 | 200 | 60 | | 85 | 500 | 0.1 | 218.3 |
| 39 | a2-6 | Me | H | Et | 3 | 305 | | 160 | 300 | 266 | 200 | | 72 | 85 | 500 | 0.1 | 218.3 |
| 40 | a2-7 | H | H | Me | 4 | 384 | 119 | | 300 | 261 | 200 | 51 | | 72 | 500 | 0.1 | 232.8 |
| 41 | a2-8 | H | H | Et | 4 | 349 | | 123 | 300 | 252 | 200 | 49 | | 68 | 500 | 0.1 | 193.6 |
| 42 | a2-9 | Me | H | Et | 4 | 349 | | 123 | 300 | 252 | 200 | | 58 | 68 | 500 | 0.1 | 193.6 |
| 43 | a2-10 | H | H | Me | 5 | 419 | 98 | | 300 | 258 | 200 | 42 | | 59 | 500 | 0.1 | 208.8 |
| 44 | a2-11 | H | H | Et | 5 | 373 | | 98 | 300 | 241 | 200 | 41 | | 57 | 500 | 0.1 | 177.0 |
| 45 | a2-12 | Me | H | Et | 5 | 382 | | 100 | 300 | 247 | 200 | | 49 | 57 | 500 | 0.1 | 177.0 |
| 46 | a2-13 | H | H | Me | 6 | 437 | 81 | | 300 | 251 | 200 | 36 | | 51 | 500 | 0.1 | 191.8 |
| 47 | a2-14 | H | H | Et | 6 | 408 | | 86 | 300 | 246 | 200 | 35 | | 49 | 500 | 0.1 | 165.0 |
| 48 | a2-15 | Me | H | Et | 6 | 408 | | 86 | 300 | 246 | 200 | | 42 | 49 | 500 | 0.1 | 165.0 |

The details of the raw materials in Tables 3 and 4 are as follows.
CAMe: methyl chloroacetate
CAEt: ethyl chloroacetate
AA: acrylic acid
MAA: methacrylic acid
TEA: triethylamine
CANa: sodium monochloroacetate
NMP: N-methyl-2-pyrrolidone
MEHQ: 4-methoxyphenol

### 1-4. Production Example of Copolymer Solution

The copolymer solution containing at least one of the copolymers A to C was produced in accordance with the method described below.

### <Production Example P1 (Production of Copolymer Solution A-1)>

Into a four-necked flask equipped with a thermometer, a condenser, a stirrer, and a dropping funnel, 80 g of xylene and 20 g of 1-butanol were charged as solvents, nitrogen gas was introduced, and the mixture was stirred while maintaining the temperature 88°C. Then, a mixed solution of the monomer (a) and the monomer (b) in the amounts (g) shown in Table 5 and 2.0 g of 1,1,3,3-tetramethylbutylperoxy-2-ethylhexanoate as a polymerization initiator (initial addition) was added dropwise over 3 hours while maintaining the temperature at 88°C. Thereafter, after stirring at 88°C for 1 hour, 0.1 g of 1,1,3,3-tetramethylbutylperoxy-2-ethylhexanoate was added 3 times every hour, and after stirring for 2 hours at the same temperature, the mixture was cooled to room temperature to obtain a copolymer solution A-1. The non-volatile matter and Mw of A-1 are shown in Table 5.

### <Production Examples P2 to P11 (Production of Copolymer Solutions A-2 to A-8, B-1 to B-2, and C-1)>

Copolymer solutions A-2 to A-8, B-1 to B-2, and C-1 were obtained by performing a polymerization reaction in the same manner as in Production Example P1 except that the monomers and solvents shown in Table 5 were used. The non-volatile matter and Mw of each polymer are shown in Table 5. The unit of numerical values for the amounts of raw materials in the table is g.

**[Table 5]**

| Table 5 | | | Production Example of Copolymer Solution | | | | | | | | | | |
|---|---|---|---|---|---|---|---|---|---|---|---|---|---|
| | | | P1 | P2 | P3 | P4 | P5 | P6 | P7 | P8 | P9 | P10 | P11 |
| Monomer (a) | a1 | a1-1 | | | | 33 | | | | | | | |
| | | a1-2 | | | | | 40 | 40 | | 20 | | | |
| | | a1-3 | | | | | | | 47 | 23 | | | |
| | a2 | a2-1 | 60 | | | 10 | | | | | | | |
| | | a2-2 | | 60 | | | 12 | 12 | | 4 | | | |
| | | a2-3 | | | 60 | | | | 8 | 4 | | | |
| | | a2-4 | | | | 4 | | | | | | | |
| | | a2-5 | | | | | 5 | 5 | | 3 | | | |
| | | a2-6 | | | | | | | 2 | 2 | | | |
| | | a2-7 | | | | 1 | | | | | | | |
| | | a2-8 | | | | | 1 | 1 | | 1 | | | |
| | | a2-9 | | | | | | | 1 | 1 | | | |
| | | a2-10 | | | | 1 | | | | | | | |
| | | a2-11 | | | | | 1 | 1 | | 1 | | | |
| | | a2-12 | | | | | | | 1 | 1 | | | |
| | | a2-13 | | | | 1 | | | | | | | |
| | | a2-14 | | | | | 1 | 1 | | | | | |
| | | a2-15 | | | | | | | 1 | | | | |
| Monomer (b) | b1 | triisopropylsilyl acrylate | | | | | | | | | 60 | | |
| | | triisopropylsilyl methacrylate | | | | | | | | | | 50 | |
| | b2 | methyl methacrylate | 40 | 30 | 30 | 40 | 30 | 40 | 30 | 30 | 30 | 10 | 50 |
| | | 2-methoxyethyl acrylate | | 10 | 10 | 10 | 10 | | 10 | 10 | | | 10 |
| | | 2-methoxyethyl methacrylate | | | | | | | | | | 30 | |
| | | n-butyl acrylate | | | | | | | | | 10 | 10 | 40 |
| Total of monomer solid contents | | | 100 | 100 | 100 | 100 | 100 | 100 | 100 | 100 | 100 | 100 | 100 |
| Solvent | xylene | | 80 | 80 | 100 | 80 | 80 | 50 | 100 | 50 | 100 | 100 | 100 |
| | 1-butanol | | 20 | 20 | | 20 | 20 | | | | | | |
| | butyl acetate | | | | | | | 50 | | 50 | | | |
| Weight-average molecular weight (Mw) | | | 31900 | 30800 | 29300 | 31200 | 31400 | 29900 | 29400 | 29900 | 29800 | 30500 | 32000 |
| Non-volatile matter (%, 125°C, 1 hour) | | | 51.5 | 51.2 | 51.3 | 51.5 | 51.2 | 51 | 51.3 | 51.1 | 51.3 | 51.2 | 51.1 |
| Copolymer solution name | | | A-1 | A-2 | A-3 | A-4 | A-5 | A-6 | A-7 | A-8 | B-1 | B-2 | C-1 |

### 1-5. Other Production Examples

### <Production Example 49 (Production of Gum Rosin Solution)>

Into a flask equipped with a thermometer, a refluxing condenser, and a stirrer, 300 g of Chinese gum rosin (WW) and 310 g of xylene were added, and the mixture was refluxed and dehydrated under reduced pressure at 70 to 80°C for 1 hour to obtain a xylene solution of gum rosin (brown transparent liquid, solid content: 50%). The non-volatile matter of the resulting solution was 50.3%.

### <Production Example 50 (Production of Rosin Zinc Salt Solution)>

Into a flask equipped with a thermometer, a refluxing condenser, and a stirrer, 240 g of Chinese gum rosin (WW) and 360 g of xylene were added, and 120 g of zinc oxide was further added thereto so that all the resin acids in the rosin form zinc salts, and the mixture was refluxed and dehydrated under reduced pressure at 70 to 80°C for 3 hours. Thereafter, the mixture was cooled and filtered to obtain a xylene solution of rosin zinc salt (dark brown transparent liquid, solid content: 50%). The non-volatile matter of the resulting solution was 50.2%.

### 2. Examples and Comparative Examples (Production of Coating Composition)

The components shown in Tables 6 to 9 were blended in the proportions (% by mass) shown in the same tables, and the coating compositions were produced by mixing and dispersing the mixture with glass beads of 1.5 to 2.5 mm in diameter.

**[Table 6]**

| Table 6 | | | Example | | | | | | | |
|---|---|---|---|---|---|---|---|---|---|---|
| | | | 1 | 2 | 3 | 4 | 5 | 6 | 7 | 8 |
| Copolymer A | copolymer solution A-1 | | 25 | | | | | | | |
| | copolymer solution A-2 | | | 25 | | | | | | |
| | copolymer solution A-3 | | | | 25 | | | | | |
| | copolymer solution A-4 | | | | | 25 | | | | |
| | copolymer solution A-5 | | | | | | 25 | | | |
| | copolymer solution A-6 | | | | | | | 25 | | |
| | copolymer solution A-7 | | | | | | | | 25 | |
| | copolymer solution A-8 | | | | | | | | | 25 |
| Carboxylic acid ester Q | carboxylic acid ester solution q-2 | | 2 | 2 | 2 | 2 | 2 | 2 | 2 | 2 |
| | carboxylic acid ester solution q-7 | | 1.5 | 1.5 | 1.5 | 1.5 | 1.5 | 1.5 | 1.5 | 1.5 |
| | carboxylic acid ester solution q-12 | | 1 | 1 | 1 | 1 | 1 | 1 | 1 | 1 |
| | carboxylic acid ester solution q-17 | | 0.5 | 0.5 | 0.5 | 0.5 | 0.5 | 0.5 | 0.5 | 0.5 |
| | carboxylic acid ester solution q-22 | | 0.5 | 0.5 | 0.5 | 0.5 | 0.5 | 0.5 | 0.5 | 0.5 |
| | carboxylic acid ester solution q-27 | | 0.5 | 0.5 | 0.5 | 0.5 | 0.5 | 0.5 | 0.5 | 0.5 |
| Antifouling agent | cuprous oxide | | 45 | 45 | 45 | 45 | 45 | 45 | 45 | 45 |
| | copper pyrithione | | 3 | 3 | 3 | 3 | 3 | 3 | 3 | 3 |
| Pigment | red iron oxide | | 2 | 2 | 2 | 2 | 2 | 2 | 2 | 2 |
| | talc | | 2 | 2 | 2 | 2 | 2 | 2 | 2 | 2 |
| | zinc oxide | | 4 | 4 | 4 | 4 | 4 | 4 | 4 | 4 |
| | titanium oxide | | 1 | 1 | 1 | 1 | 1 | 1 | 1 | 1 |
| Other additives | Disparlon A603-20X | | 3 | 3 | 3 | 3 | 3 | 3 | 3 | 3 |
| | tetraethoxysilane | | 0.5 | 0.5 | 0.5 | 0.5 | 0.5 | 0.5 | 0.5 | 0.5 |
| Solvent | xylene | | 4.5 | 7 | 4.5 | 7 | 4.5 | 7 | 4.5 | 7 |
| | 1-butanol | | | 1.5 | | 1.5 | | 1.5 | | 1.5 |
| | propylene glycol monomethyl ether | | 4 | | 4 | | 4 | | 4 | |
| Total | | | 100 | 100 | 100 | 100 | 100 | 100 | 100 | 100 |
| Test Example 1 Rotary Test | average coating film dissolution amount (µm/month) | initial to 6 months later | 10.0 | 7.5 | 5.8 | 8.3 | 6.7 | 5.8 | 5.0 | 5.0 |
| | | after 6 to 12 months | 10.0 | 7.5 | 5.0 | 8.3 | 6.7 | 6.7 | 4.2 | 7.5 |
| | | after 12 to 18 months | 6.7 | 8.3 | 7.5 | 8.3 | 8.3 | 7.5 | 7.5 | 7.5 |
| | | after 18 to 24 months | 6.7 | 6.7 | 6.7 | 6.7 | 6.7 | 6.7 | 6.7 | 6.7 |
| | | after 24 to 30 months | 8.3 | 6.7 | 5.0 | 6.7 | 6.7 | 6.7 | 5.0 | 5.0 |
| | | after 30 to 36 months | 8.3 | 8.3 | 8.3 | 8.3 | 8.3 | 8.3 | 8.3 | 8.3 |
| | coating film condition after 36 months | | A | AA | AA | A | AA | AA | AA | AA |
| Test Example 2 Antifouling Test | after 12 months | | AA | AA | AA | AA | AA | AA | AA | AA |
| | after 24 months | | A | A | A | A | A | A | A | A |

**[Table 7]**

| Table 7 | | | Example | | | | | |
|---|---|---|---|---|---|---|---|---|
| | | | 9 | 10 | 11 | 12 | 13 | 14 |
| Copolymer A | copolymer solution A-5 | | | | | 25 | 25 | 25 |
| Copolymer B | copolymer solution B-1 | | 25 | | | | | |
| | copolymer solution B-2 | | | 25 | | | | |
| Copolymer C | copolymer solution C-1 | | | | 25 | | | |
| Carboxylic acid ester Q | carboxylic acid ester solution q-1 | | | | | 2 | | |
| | carboxylic acid ester solution q-2 | | 2 | 2 | 2 | | | |
| | carboxylic acid ester solution q-3 | | | | | | 2 | |
| | carboxylic acid ester solution q-4 | | | | | | | 2 |
| | carboxylic acid ester solution q-6 | | | | | 1.5 | | |
| | carboxylic acid ester solution q-7 | | 1.5 | 1.5 | 1.5 | | | |
| | carboxylic acid ester solution q-8 | | | | | | 1.5 | |
| | carboxylic acid ester solution q-9 | | | | | | | 1.5 |
| | carboxylic acid ester solution q-11 | | | | | 1 | | |
| | carboxylic acid ester solution q-12 | | 1 | 1 | 1 | | | |
| | carboxylic acid ester solution q-13 | | | | | | 1 | |
| | carboxylic acid ester solution q-14 | | | | | | | 1 |
| | carboxylic acid ester solution q-16 | | | | | 0.5 | | |
| | carboxylic acid ester solution q-17 | | 0.5 | 0.5 | 0.5 | | | |
| | carboxylic acid ester solution q-18 | | | | | | 0.5 | |
| | carboxylic acid ester solution q-19 | | | | | | | 0.5 |
| | carboxylic acid ester solution q-21 | | | | | 0.5 | | |
| | carboxylic acid ester solution q-22 | | 0.5 | 0.5 | 0.5 | | | |
| | carboxylic acid ester solution q-23 | | | | | | 0.5 | |
| | carboxylic acid ester solution q-24 | | | | | | | 0.5 |
| | carboxylic acid ester solution q-26 | | | | | 0.5 | | |
| | carboxylic acid ester solution q-27 | | 0.5 | 0.5 | 0.5 | | | |
| | carboxylic acid ester solution q-28 | | | | | | 0.5 | |
| | carboxylic acid ester solution q-29 | | | | | | | 0.5 |
| Antifouling agent | cuprous oxide | | 45 | 45 | 45 | 45 | 45 | 45 |
| | copper pyrithione | | 3 | 3 | 3 | 3 | 3 | 3 |
| Pigment | red iron oxide | | 2 | 2 | 2 | 2 | 2 | 2 |
| | talc | | 2 | 2 | 2 | 2 | 2 | 2 |
| | zinc oxide | | 4 | 4 | 4 | 4 | 4 | 4 |
| | titanium oxide | | 1 | 1 | 1 | 1 | 1 | 1 |
| Other additives | Disparlon A603-20X | | 3 | 3 | 3 | 3 | 3 | 3 |
| | tetraethoxysilane | | 0.5 | 0.5 | 0.5 | 0.5 | 0.5 | 0.5 |
| Solvent | xylene | | 8.5 | 8.5 | 8.5 | 4.5 | 4.5 | 7 |
| | 1-butanol | | | | | | | 1.5 |
| | propylene glycol monomethyl ether | | | | | 4 | 4 | |
| Total | | | 100 | 100 | 100 | 100 | 100 | 100 |
| Test Example 1 Rotary Test | average coating film dissolution amount (µm/month) | initial to 6 months later | 4.2 | 3.3 | 0.8 | 8.3 | 6.7 | 7.5 |
| | | after 6 to 12 months | 5.8 | 5.0 | 0.8 | 6.7 | 7.5 | 7.5 |
| | | after 12 to 18 months | 10.0 | 8.3 | 1.7 | 10.0 | 7.5 | 8.3 |
| | | after 18 to 24 months | 10.0 | 10.0 | 1.7 | 6.7 | 7.5 | 6.7 |
| | | after 24 to 30 months | 11.7 | 11.7 | 0.8 | 6.7 | 4.2 | 6.7 |
| | | after 30 to 36 months | 16.7 | 13.3 | 0.0 | 10.0 | 10.0 | 8.3 |
| | coating film condition after 36 months | | AA | AA | AA | AA | AA | AA |
| Test Example 2 Antifouling Test | after 12 months | | AA | AA | A | AA | AA | AA |
| | after 24 months | | A | A | B | A | A | A |

**[Table 8]**

| Table 8 | | | Example | | | | | |
|---|---|---|---|---|---|---|---|---|
| | | | 15 | 16 | 17 | 18 | 19 | 20 |
| Copolymer A | copolymer solution A-5 | | 25 | 25 | 25 | 25 | 25 | 25 |
| Carboxylic acid ester Q | carboxylic acid ester solution q-1 | | | | | | 6 | |
| | carboxylic acid ester solution q-2 | | | 1 | 1 | 2 | | 6 |
| | carboxylic acid ester solution q-5 | | 2 | | | | | |
| | carboxylic acid ester solution q-7 | | | 0.8 | 0.8 | 1.5 | | |
| | carboxylic acid ester solution q-10 | | 1.5 | | | | | |
| | carboxylic acid ester solution q-12 | | | 0.5 | 0.5 | 1 | | |
| | carboxylic acid ester solution q-15 | | 1 | | | | | |
| | carboxylic acid ester solution q-17 | | | 0.3 | 0.3 | 0.5 | | |
| | carboxylic acid ester solution q-20 | | 0.5 | | | | | |
| | carboxylic acid ester solution q-22 | | | 0.2 | 0.2 | 0.5 | | |
| | carboxylic acid ester solution q-25 | | 0.5 | | | | | |
| | carboxylic acid ester solution q-27 | | | 0.2 | 0.2 | 0.5 | | |
| | carboxylic acid ester solution q-30 | | 0.5 | | | | | |
| Release modifier | rosin zinc salt solution | | | 3 | | | | |
| | gum rosin solution | | | | 3 | | | |
| Antifouling agent | cuprous oxide | | 45 | 45 | 45 | | 45 | 45 |
| | copper pyrithione | | 3 | 3 | 3 | 1 | 3 | 3 |
| | Sea Nine | | | | | 1 | | |
| | Zineb | | | | | 3 | | |
| | zinc pyrithione | | | | | 1 | | |
| | Econea | | | | | 3 | | |
| | medetomidine | | | | | 1 | | |
| Pigment | red iron oxide | | 2 | 2 | 2 | 10 | 2 | 2 |
| | talc | | 2 | 2 | 2 | 8 | 2 | 2 |
| | zinc oxide | | 4 | 4 | 4 | 30 | 4 | 4 |
| | titanium oxide | | 1 | 1 | 1 | 1 | 1 | 1 |
| Other additives | Disparlon A603-20X | | 3 | 3 | 3 | 3 | 3 | 3 |
| | tetraethoxysilane | | 0.5 | 0.5 | 0.5 | 0.5 | 0.5 | 0.5 |
| Solvent | xylene | | 7 | 4.5 | 7 | 3.5 | 7 | 7 |
| | 1-butanol | | 1.5 | | 1.5 | | 1.5 | 1.5 |
| | propylene glycol monomethyl ether | | | 4 | | 3 | | |
| Total | | | 100 | 100 | 100 | 100 | 100 | 100 |
| Test Example 1 Rotary Test | average coating film dissolution amount (µm/month) | initial to 6 months later | 5.8 | 7.5 | 7.2 | 8.3 | 7.2 | 6.7 |
| | | after 6 to 12 months | 5.8 | 6.7 | 6.8 | 6.7 | 6.8 | 7.5 |
| | | after 12 to 18 months | 8.3 | 9.2 | 6.8 | 10.0 | 6.8 | 5.8 |
| | | after 18 to 24 months | 6.7 | 6.7 | 6.7 | 5.8 | 6.7 | 6.7 |
| | | after 24 to 30 months | 6.7 | 7.5 | 6.7 | 6.7 | 6.7 | 8.3 |
| | | after 30 to 36 months | 8.3 | 8.3 | 8.3 | 9.2 | 5.8 | 4.2 |
| | coating film condition after 36 months | | AA | AA | AA | AA | A | A |
| Test Example 2 Antifouling Test | after 12 months | | AA | AA | AA | AA | AA | AA |
| | after 24 months | | A | A | A | A | A | A |

**[Table 9]**

| Table 9 | | | Comparative Example | | | | | |
|---|---|---|---|---|---|---|---|---|
| | | | 1 | 2 | 3 | 4 | 5 | 6 |
| Copolymer A | copolymer solution A-5 | | 25 | 25 | | | | 25 |
| Copolymer B | copolymer solution B-1 | | | | 25 | | | |
| | copolymer solution B-2 | | | | | 25 | | |
| Copolymer C | copolymer solution C-1 | | | | | | 25 | |
| Release modifier | rosin zinc salt solution | | 6 | | 6 | 6 | 6 | |
| | gum rosin solution | | | 6 | | | | |
| Antifouling agent | cuprous oxide | | 45 | 45 | 45 | 45 | 45 | 45 |
| | copper pyrithione | | 3 | 3 | 3 | 3 | 3 | 3 |
| Pigment | red iron oxide | | 2 | 2 | 2 | 2 | 2 | 2 |
| | talc | | 2 | 2 | 2 | 2 | 2 | 2 |
| | zinc oxide | | 4 | 4 | 4 | 4 | 4 | 4 |
| | titanium oxide | | 1 | 1 | 1 | 1 | 1 | 1 |
| Other additives | Disparlon A603-20X | | 3 | 3 | 3 | 3 | 3 | 3 |
| | tetraethoxysilane | | 0.5 | 0.5 | 0.5 | 0.5 | 0.5 | 0.5 |
| | rosin ester | | | | | | | 3 |
| Solvent | xylene | | 7 | 4.5 | 8.5 | 8.5 | 8.5 | 9.5 |
| | 1-butanol | | 1.5 | | | | | 2 |
| | propylene glycol monomethyl ether | | | 4 | | | | |
| Total | | | 100 | 100 | 100 | 100 | 100 | 100 |
| Test Example 1 Rotary Test | average coating film dissolution amount (µm/month) | initial to 6 months later | 5.0 | 5.0 | 1.7 | 0.8 | 0.8 | 1.3 |
| | | after 6 to 12 months | 0.8 | 1.7 | 8.3 | 5.8 | 0.5 | 1.2 |
| | | after 12 to 18 months | 1.7 | 0.8 | 10.0 | 10.0 | 1.2 | 2.5 |
| | | after 18 to 24 months | 0.0 | 0.8 | 10.0 | 10.0 | 0.0 | 2.5 |
| | | after 24 to 30 months | 1.7 | 1.7 | 15.0 | 13.3 | 0.8 | 0.8 |
| | | after 30 to 36 months | 0.8 | 0.0 | 21.7 | 18.3 | 0.8 | 1.7 |
| | coating film condition after 36 months | | B | B | C | C | A | A |
| Test Example 2 Antifouling Test | after 12 months | | A | AA | AA | AA | C | C |
| | after 24 months | | C | C | A | A | C | C |

The details of the components in the table are as follows.

### <Release Modifier>

Rosin zinc salt solution: solution produced in Production Example 50 was used.

Gum rosin solution: solution produced in Production Example 49 was used.

### <Antifouling Agent>

Cuprous oxide: product name "NC-301" (manufactured by Nissin Chemco Ltd.)
Copper pyrithione: product name "Copper Omadine" (manufactured by Lonza Group AG)
Sea Nine: product name "SEA-NINE 211", 4,5-dichloro-2-octyl-4-isothiazolin-3-one (manufactured by Rohm & Haas), active ingredient 30% xylene solution
Zineb: [ethylenebis(dithiocarbamate)] zinc (manufactured by Ouchi Shinko Chemical Industrial Co., Ltd.)
Zinc pyrithione: (manufactured by Lonza Group AG)
Econea: product name "Econea 028" 2-(p-chlorophenyl)-3-cyano-4-bromo-5-trifluoromethylpyrrole (manufactured by Janssen PMP)
Medetomidine: (±)-4-[1-(2,3-dimethylphenyl)ethyl]-1H-imidazole (manufactured by Wako Pure Chemical Industries, Ltd.)

### <Other Additives>

Red iron oxide: product name "BENGARA KINGYOKU" (manufactured by Morishita Red iron oxide Kogyo Co., Ltd.)
Talc: product name "Talc MS" (manufactured by Nippon Talc Co., Ltd.)
Zinc oxide: product name "Zinc Oxide (Type II)" (manufactured by Seido Chemical Industry Co., Ltd.)
Titanium oxide: product name "FR-41" (manufactured by Furukawa Co., Ltd.)
Disparlon A603-20X: amide thixotropic agent, product name "Disparlon A603-20X" (manufactured by Kusumoto Chemicals, Ltd.)
Tetraethoxysilane: product name "Ethyl Silicate 28" (manufactured by Colcoat Co., Ltd.)
Rosin ester: product name "Ester Gum AA-L" (manufactured by Arakawa Chemical Industries, Ltd.)

### 3. Evaluation

The coating compositions of Examples and Comparative Examples were subjected to the following tests. The results are shown in Tables 6 to 9.

As shown in Tables 6 to 9, all Examples were superior to all Comparative Examples in at least one of the rotary test and the antifouling test.

### <Test Example 1 (Rotary Test)>

A water tank was provided with, in the center thereof, a rotary drum having a diameter of 515 mm and a height of 440 mm, which was configured to be rotatable by a motor. The tank was also provided with a cooling apparatus for keeping the seawater temperature constant, and an automatic pH controller for keeping the seawater pH constant.

Test plates were prepared in accordance with the following method.

First, an anti-corrosion coating material (an epoxy vinyl A/C) was applied onto a titanium plate (71 × 100 × 0.5 mm) such that the thickness after drying was about 100 µm, and dried to form an anti-corrosion coating film. Thereafter, each of the coating compositions obtained in Examples and Comparative Examples was applied thereon such that the dry film thickness was about 400 µm, and dried at 40°C for 3 days to prepare a test plate.

The test plate thus prepared was fixed to the rotary drum of the rotating apparatus of the above equipment so as to be in contact with seawater, and the rotary drum was rotated at a speed of 20 knots. During the test, the temperature and the pH of the seawater were maintained at 25°C and at 8.0 to 8.2, respectively, and the seawater was replaced every two weeks.

The initial film thickness and remaining film thickness were measured at the initial stage and every 6 months after the start of the test for each of the testing plates using a shape measurement laser microscope VK-X100 manufactured by Keyence Corporation, and the dissolved coating film thickness was calculated from the difference between the two values, to obtain the coating film dissolution amount per month (µm/month). Further, when measuring the remaining film thickness after 36 months of the rotary test, the surface of each coating film was observed with naked eyes and a microscope to evaluate the surface condition of the coating film.

Evaluation of the coating film surface condition was made in accordance with the following criteria.
AA: No defects observed
A: Hairline cracks observed in less than 10% of the total surface area of the coating film
B: Hairline cracks observed in 10 to 30% of the total surface area of the coating film
C: Hairline cracks observed in 30% or more of the total surface area of the coating film

### <Test Example 2 (Antifouling Test)>

Each of the coating compositions obtained in Examples and Comparative Examples was applied onto both sides of a PVC plate (100 × 200 × 2 mm) such that the thickness of the dry coating film was about 300 µm. The resulting coated product was dried at room temperature (25°C) for 3 days to prepare a test plate with a dry coating film having a thickness of about 300 µm. The test plate was immersed 1.5 m below sea level in Owase City, Mie Prefecture, Japan, and fouling of the test plates by adhered materials was observed after 12 months and 24 months.

Evaluation was made in accordance with the following criteria by visual observation of the surface condition of the coating films.
AA: No fouling organisms such as shellfish and algae adhered, and almost no slime
A: No fouling organisms such as shellfish and algae adhered, and slime thinly adhered (to the extent that the coating film surface was visible) but removable by lightly wiping with a brush
B: No fouling organisms such as shellfish and algae adhered, and slime adhered thickly to the extent that the coating film surface was not visible and not removable even by strong wiping with a brush
C: Fouling organisms such as shellfish and algae adhered

## Claims

1. An antifouling coating composition comprising:
a carboxylic acid ester Q represented by general formula (1); and
an antifouling agent which is selected from cuprous oxide, copper thiocyanate, copper powder, copper 2-mercaptopyridine-N-oxide, zinc 2-mercaptopyridine-N-oxide, zinc ethylene-bis-dithiocarbamate, 4,5-dichloro-2-n-octyl-3-isothiazolone, 3,4-dichlorophenyl-N,N-dimethylurea, 2-methylthio-4-t-butylamino-6-cyclopropylamino-s-triazine, 2-(p-chlorophenyl)-3-cyano-4-bromo-5-trifluoromethylpyrrole, and 4-[1-(2,3-dimethylphenyl)ethyl]-1H-imidazole, 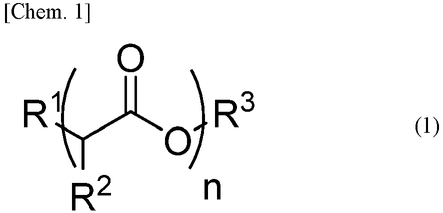
wherein R¹ represents a gum rosin acid residue, a hydrogenated rosin acid residue, a disproportionated rosin acid residue, a versatic acid residue, or a naphthenic acid residue, R² represents hydrogen, a methyl group, or a phenyl group, R³ is an alkyl group having 1 to 8 carbon atoms optionally substituted with an alkoxy group having 1 to 8 carbon atoms or a phenyl group, or represents a phenyl group, and n represents an integer of 1 to 10.

2. The antifouling coating composition of Claim 1,
wherein the antifouling coating composition comprises at least one of the copolymer A, the copolymer B, and the copolymer C;
the copolymer A is a copolymer of a monomer (a) represented by the following general formula (2) and an ethylenically unsaturated monomer (b) other than the monomer (a), and the monomer (a) comprises a compound represented by general formula (2) in which n is 2 or more;
the monomer (b) comprises a monomer (b1) and a monomer (b2) other than the monomer (b1);
the monomer (b1) is represented by general formula (3);
the copolymer B is a copolymer of the monomer (b1) and the monomer (b2); and
the copolymer C is a copolymer of the monomer (b2), 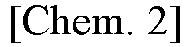 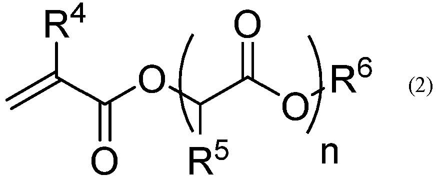
wherein R⁴ represents a methyl group, R⁵ represents hydrogen, a methyl group, or a phenyl group, R⁶ is an alkyl group having 1 to 8 carbon atoms optionally substituted with an alkoxy group having 1 to 8 carbon atoms or a phenyl group, or represents a phenyl group, and n represents an integer of 1 to 10, and 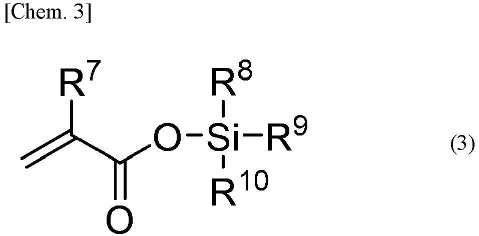
wherein R⁷ is hydrogen or a methyl group, and R⁸ to R¹⁰ are the same as or different from each other and each represent a branched alkyl group having 3 to 8 carbon atoms or a phenyl group.

3. The antifouling coating composition of Claim 2,
wherein the antifouling coating composition comprises a copolymer A.

4. The antifouling coating composition of Claim 2 or 3,
wherein the antifouling coating composition comprises a copolymer B.

5. The antifouling coating composition of any one of Claims 2 to 4,
wherein the antifouling coating composition comprises a copolymer C.

## Patentansprüche

1. Fäulnisverhindernde Beschichtungszusammensetzung, umfassend:
einen Carbonsäureester Q, dargestellt durch die allgemeine Formel (1); und
ein Fäulninsverhinderungsmittel, ausgewählt aus Kupfer(I)-oxid, Kupferthiocyanat, Kupferpulver, Kupfer-2-mercaptopyridin-N-oxid, Zink-2-mercaptopyridin-N-oxid, Zinkethylen-bis-dithiocarbamat, 4,5-Dichlor-2-n-octyl-3-isothiazolon, 3,4-Dichlorphenyl-N,N-dimethylharnstoff, 2-Methylthio-4-t-butylamino-6-cyclopropylamino-s-triazin, 2-(p-Chlorphenyl)-3-cyano-4-brom-5-trifluormethylpyrrol und 4-[1-(2,3-Dimethylphenyl)ethyl]-1H-imidazol, 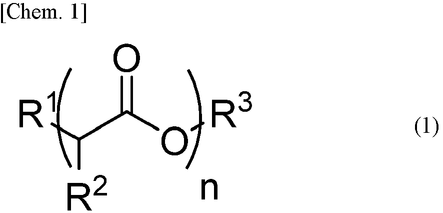
wobei R¹ einen Harzkolophoniumsäurerest, einen hydrogenierten Kolophoniumsäurerest, einen disproportionierten Kolophoniumsäurerest, einen Versatinsäurerest oder einen Naphthensäurerest darstellt, R² Wasserstoff, eine Methylgruppe oder eine Phenylgruppe darstellt, R³ eine Alkylgruppe mit 1 bis 8 Kohlenstoffatomen ist, die optional mit einer Alkoxygruppe mit 1 bis 8 Kohlenstoffatomen oder einer Phenylgruppe substituiert ist, oder eine Phenylgruppe darstellt, und n eine ganze Zahl von 1 bis 10 darstellt.

2. Fäulnisverhindernde Beschichtungszusammensetzung nach Anspruch 1,
wobei die fäulnisverhindernde Beschichtungszusammensetzung mindestens eines des Copolymers A, des Copolymers B und des Copolymers C umfasst;
wobei das Copolymer A ein Copolymer eines Monomers (a), das durch die folgende allgemeine Formel (2) dargestellt ist, und eines ethylenisch ungesättigten Monomers (b) ist, das nicht das Monomer (a) ist, und das Monomer (a) eine Verbindung umfasst, die durch die allgemeine Formel (2) dargestellt ist, in der n 2 oder mehr ist;
wobei das Monomer (b) ein Monomer (b1) und ein Monomer (b2) umfasst, das nicht das Monomer (b1) ist;
wobei das Monomer (b1) durch die allgemeine Formel (3) dargestellt ist;
wobei das Copolymer B ein Copolymer des Monomers (b1) und des Monomers (b2) ist; und
wobei das Copolymer C ein Copolymer des Monomers (b2) ist, 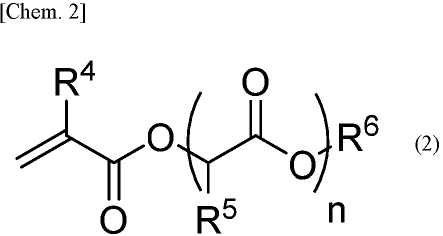
wobei R⁴ eine Methylgruppe darstellt, R⁵ Wasserstoff, eine Methylgruppe oder eine Phenylgruppe darstellt, R⁶ eine Alkylgruppe mit 1 bis 8 Kohlenstoffatomen ist, die optional mit einer Alkoxygruppe mit 1 bis 8 Kohlenstoffatomen oder einer Phenylgruppe substituiert ist, oder eine Phenylgruppe darstellt, und n eine ganze Zahl von 1 bis 10 darstellt, und 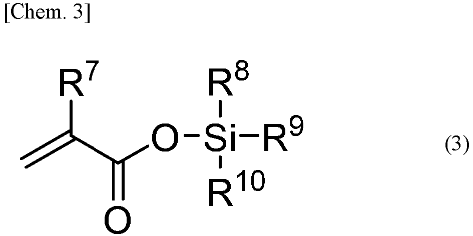
wobei R⁷ Wasserstoff oder eine Methylgruppe ist und R⁸ bis R¹⁰ gleich sind oder sich voneinander unterscheiden und jeweils eine verzweigte Alkylgruppe mit 3 bis 8 Kohlenstoffatomen oder eine Phenylgruppe darstellen.

3. Fäulnisverhindernde Beschichtungszusammensetzung nach Anspruch 2,
wobei die fäulnisverhindernde Beschichtungszusammensetzung ein Copolymer A umfasst.

4. Fäulnisverhindernde Beschichtungszusammensetzung nach Anspruch 2 oder 3,
wobei die fäulnisverhindernde Beschichtungszusammensetzung ein Copolymer B umfasst.

5. Fäulnisverhindernde Beschichtungszusammensetzung nach einem der Ansprüche 2 bis 4,
wobei die fäulnisverhindernde Beschichtungszusammensetzung ein Copolymer C umfasst.

## Revendications

1. Composition de revêtement antisalissure comprenant :
un ester d'acide carboxylique Q représenté par la formule générale (1) ; et
un agent antisalissure qui est choisi parmi l'oxyde cuivreux, le thiocyanate de cuivre, la poudre de cuivre, le 2-mercaptopyridine-N-oxyde de cuivre, le 2-mercaptopyridine-N-oxyde de zinc, l'éthylène-bis-dithiocarbamate de zinc, le 4,5-dichloro-2-n-octyl-3-isothiazolone, la 3,4-dichlorophényl-N,N-diméthylurée, la 2-méthylthio-4-t-butylamino-6-cyclopropylamino-s-triazine, le 2-(p-chlorophényl)-3-cyano-4-bromo-5-trifluorométhylpyrrole et le 4-[1-(2,3-diméthylphényl)éthyle]-1H-imidazole, 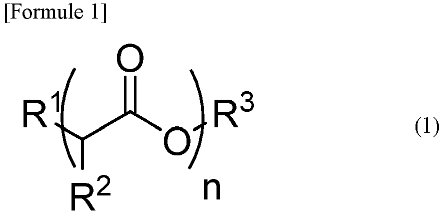
dans laquelle R¹ représente un résidu d'acide de colophane, un résidu d'acide de colophane hydrogéné, un résidu d'acide de colophane disproportionné, un résidu d'acide versatique ou un résidu d'acide naphténique, R² représente l'hydrogène, un groupe méthyle ou un groupe phényle, R³ est un groupe alkyle ayant de 1 à 8 atomes de carbone éventuellement substitué par un groupe alcoxy ayant de 1 à 8 atomes de carbone ou un groupe phényle, ou représente un groupe phényle, et n représente un nombre entier de 1 à 10.

2. Composition de revêtement antisalissure de la revendication 1,
dans laquelle la composition de revêtement antisalissure comprend au moins un d'un copolymère A, d'un copolymère B et d'un copolymère C ;
dans laquelle le copolymère A est un copolymère d'un monomère (a) représenté par la formule générale (2) suivante et d'un monomère (b) éthyléniquement insaturé autre que le monomère (a), et le monomère (a) comprend un composé représenté par la formule générale (2) dans laquelle n est égal ou supérieur à 2 ;
dans laquelle le monomère (b) comprend un monomère (b1) et un monomère (b2) autre que le monomère (b1) ;
dans laquelle le monomère (b1) est représenté par la formule générale (3) ;
dans laquelle le copolymère B est un copolymère du monomère (b1) et du monomère (b2) ; et
dans laquelle le copolymère C est un copolymère du monomère (b2), 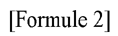 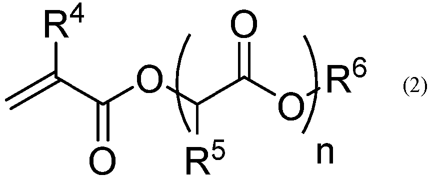
dans laquelle R⁴ représente un groupe méthyle, R⁵ représente l'hydrogène, un groupe méthyle ou un groupe phényle, R⁶ est un groupe alkyle ayant de 1 à 8 atomes de carbone éventuellement substitué par un groupe alcoxy ayant de 1 à 8 atomes de carbone ou un groupe phényle, ou représente un groupe phényle, et n représente un nombre entier de 1 à 10, et 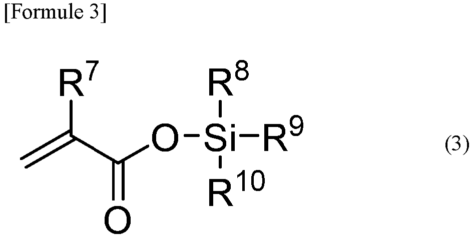
dans laquelle R⁷ est un hydrogène ou un groupe méthyle, et R⁸ à R¹⁰ sont identiques ou différents les uns des autres et représentent chacun un groupe alkyle ramifié ayant de 3 à 8 atomes de carbone ou un groupe phényle.

3. Composition de revêtement antisalissure de la revendication 2,
dans laquelle la composition de revêtement antisalissure comprend un copolymère A.

4. Composition de revêtement antisalissure de la revendication 2 ou 3,
dans laquelle la composition de revêtement antisalissure comprend un copolymère B.

5. Composition de revêtement antisalissure de l'une quelconque des revendications 2 à 4,
dans laquelle la composition de revêtement antisalissure comprend un copolymère C.
